Europäisches Patentamt

European Patent Office

Office européen des brevets

(11) Publication number: **0 520 122 A1**

## EUROPEAN PATENT APPLICATION

(21) Application number: **91830280.3**

(22) Date of filing: **25.06.91**

(51) Int. Cl.⁵: **B23D 37/12**, B23D 41/04, B23F 1/08, B23Q 3/155

(43) Date of publication of application:
**30.12.92 Bulletin 92/53**

(84) Designated Contracting States:
**AT BE CH DE DK ES FR GB GR IT LI LU NL SE**

(71) Applicant: **OFFICINE MECCANICHE VARINELLI S.p.A.**
**Via del Bruno, 42**
**I-20043 Arcore (Milano)(IT)**

(72) Inventor: **Varinelli, Antonio**
**Via Torelli Viollier 26**

**I-20125 Milano(IT)**
Inventor: **Varinelli, Marco**
**Via Torelli Viollier 26**
**I-20125 Milano(IT)**
Inventor: **Bianco, Oreste**
**Regione Grange 64**
**I-10040 Caselette (Torino)(IT)**

(74) Representative: **Buzzi, Franco et al**
**c/o Jacobacci-Casetta & Perani S.p.A. Via Alfieri, 17**
**I-10121 Torino(IT)**

(54) **Pot-broach vertical broaching machine.**

(57) A vertical broaching machine includes a structure (2) carrying vertical guide means (3) along which a slide (4) is movable, a pot broach (5) with a vertical axis, carried by the slide (4) and containing a column of annular broaching tools (53) coaxial with the pot (5) and a vertical rod (6) arranged coaxially below the pot broach (5) for supporting the pieces (P) to be broached. An annular horizontal bracket (18), which supports the lower end (35) of the pot broach (5), is fixed to the bottom of the slide (4) and releasable fixing means (12) clamp the lower end (35) of the pot broach (5) axially to the annular bracket (18).

FIG. 8

The present invention relates to vertical broaching machines and, more particularly, to broaching machines with tubular pots, which are referred to below as "pot broaches", for working external profiles.

Conventionally, such a broaching machine includes a structure carrying vertical guide means along which a slide is movable, a pot broach with a vertical axis carried by the slide and containing one or more annular broaching tools coaxial with the pot, a vertical rod arranged coaxially below the pot broach for supporting the pieces to be broached, and releasable means for fixing the pot broach to the slide.

In vertical broaching machines of this type described, for example, in WO 90/15685 in the name of the present Applicant, the pot broach is usually fixed to the slide by a series of restraining members associated with a flat rear flange of the pot. These restraining members generally comprise locating wedges and screws for fixing the flange to the slide.

These solutions have various disadvantages: in the first place they require considerable manual intervention for the fitting and removal of the pot. In the second place, these operations are complex because, during fitting, the pot has to be supported from above and the engagement parts of the restraining elements have to be centered accurately between the rear flange and the slide; in practice, this results in long pauses in the operation of the broaching machine whenever the pot broach has to be removed and replaced by a new pot broach with new tools so that the annular broaches can be dressed.

The object of the present invention is to avoid these problems and to provide a broaching machine of the type defined above, in which the pot broach is fixed to the vertical slide in a manner such that it can be fitted and removed quickly and easily.

A further object of the invention is to enable the pot broach to be fitted on the slide and removed therefrom effortlessly and with less manual intervention.

According to the invention, these and other objects are achieved by virtue of the fact that a horizontal annular bracket fixed to the bottom of the horizontal slide supports the lower end of the pot broach and in that the lower end of the pot broach is clamped to the annular bracket by the releasable means for fixing the pot broach to the slide.

The fixing means conveniently include a helical axial coupling between the lower end of the pot broach and the annular bracket.

To advantage, motor-driven actuator means are associated with the helical coupling for engaging it after the lower end of the pot broach has been brought to bear axially on the annular bracket from above, and releasing it to enable the pot broach to be moved axially upwardly away from the annular bracket.

In order further to facilitate the fitting of the pot broach, there may also be axial centering means and restraining means for preventing the lower end of the pot broach from rotating relative to the annular bracket. In this case, the annular coupling includes a horizontal ring nut which is rotatable but is fixed axially, which is supported coaxially by the annular bracket, and which has a ring of first, spaced-apart radial teeth with helical ramps, and the lower end of the pot broach has a horizontal, fixed ring which is coaxial with the ring nut and has a ring of second, spaced-apart radial teeth which have helical ramps and are complementary to the first teeth. The ring nut is movable angularly between a position in which the ring can be fitted thereon from above, and in which the spaces between the first teeth are aligned axially with the second teeth, and a clamping position in which the first teeth are engaged face to face with the second teeth.

Conveniently, the rotary ring nut has two diametrally-opposed axial abutment projections and the motor-driven actuator means comprise two pairs of horizontal, opposed, linear fluid actuators which act against the axial abutment projections in order to rotate the ring nut from its fitting position to its clamping position and vice versa.

To advantage, respective resilient thrust means are associated with the linear actuators.

Further characteristics and advantages of the invention will become clear in the course of the detailed description which follows with reference to the appended drawings provided purely by way of non-limiting example, in which:

Figure 1 is a schematic, perspective view of a vertical pot broaching machine according to the invention,

Figure 2 is a partial side elevational view taken on the arrow II of Figure 1, on an enlarged scale,

Figure 3 is a horizontal section taken on the line III-III of Figure 2, on an enlarged scale,

Figure 4 is a vertical section taken on the line IV-IV of Figure 3,

Figures 5, 6 and 7 are three diagrammatic views which show three successive stages of the operation of the system for fixing the pot broach,

Figure 8 is an exploded, perspective view of Figure 2,

Figure 9 is a horizontal section taken on the line IX-IX of Figure 4, and

Figure 10 is a vertical section taken on the line X-X of Figure 9.

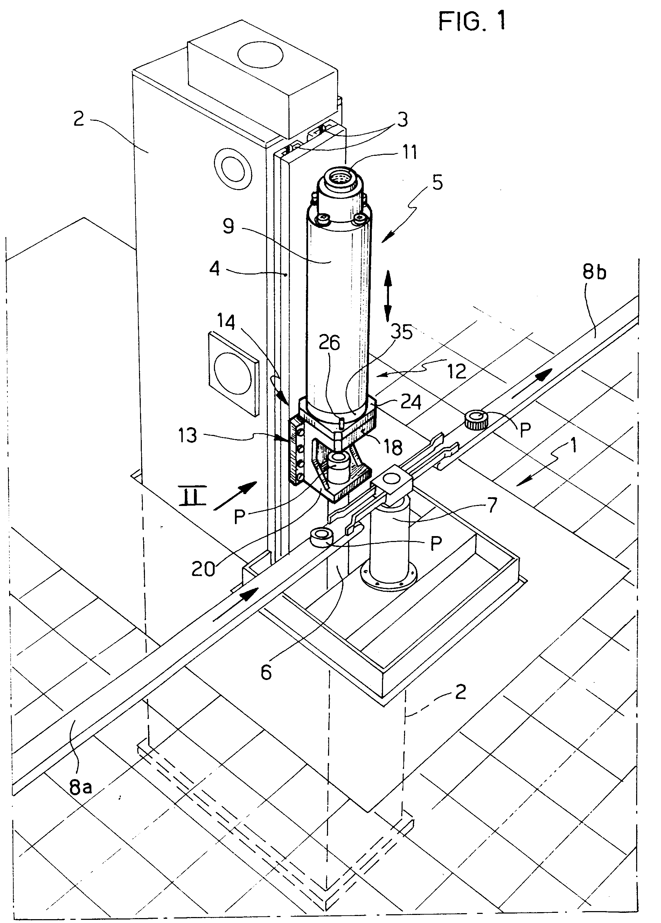

With reference first of all to Figure 1, the vertical broaching machine according to the invention includes essentially, and in generally conventional manner, a support structure 1 from which a support column 2 extends, its front carrying vertical guides 3 along which is movable a slide 4 to which a pot broach 5 with a vertical axis is fixed releasably.

The slide 4 can be moved vertically along the guides 3 by a drive unit, not shown but of known type, for example, of the type described in WO 90/15685.

Beaneath the pot broach 5 and coaxial therewith is a vertical rod 6 for supporting the pieces to be broached. These pieces, indicated P in Figure 1, are constituted, for example, by wheels on the outer peripheral surfaces of which teeth are to be formed by the pot broach 5. The sets of teeth may be cylindrical, in which case the support rod 6 is stationary, or helical, in which case the support rod 6 may be rotated in the manner known from WO 90/15685.

There may be a motor-driven rotary manipulator arm 7 for taking the pieces P to be worked from an input line 8a and loading them onto the top of the support rod 6 and for unloading broached pieces P onto an output line 8b.

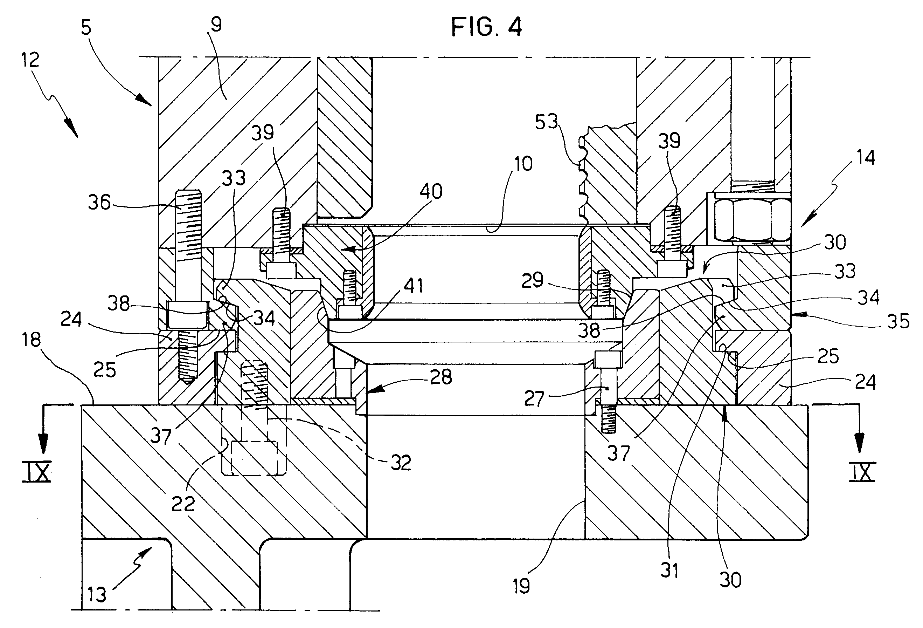

The pot broach 5 has a generally conventional structure, except for the differences which will be described in detail below; for the purposes of the present invention, it suffices to explain that it includes a tubular outer casing 9 with a lower opening 10 for admitting the piece P and an upper opening 11 for discharging it and contains a column of annular broaching tools, of which one is indicated 53 in Figure 4, and which are clamped coaxially in the casing 9.

The pot broach 5 is fixed firmly to the slide 4 so as to withstand the tensile stresses of the broaching operation in the course of which the pot broach 5 is moved downwardly with the annular broaching tools 53 in engagement with the periphery of the piece P which is supported by the support rod 7. The pot broach 5 is fixed releasably so that it can be removed when it needs to be replaced.

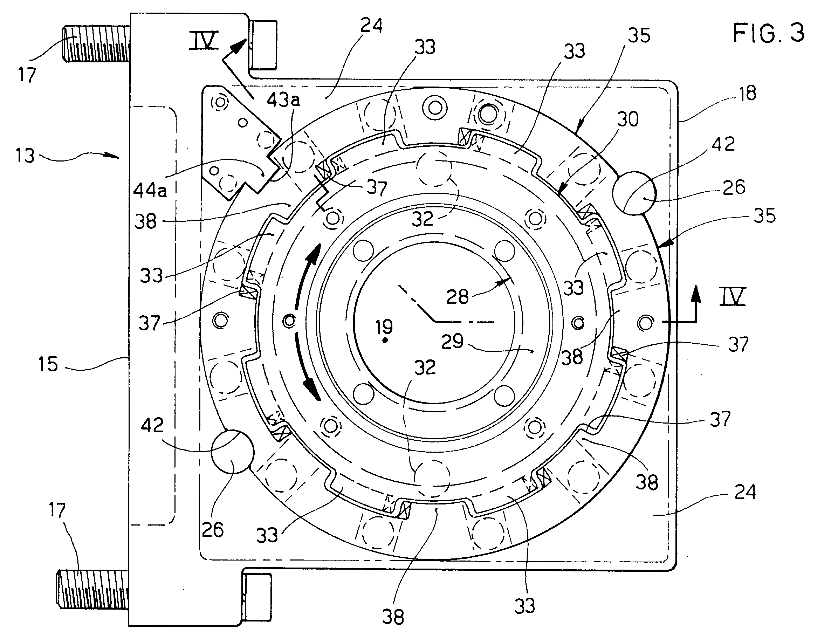

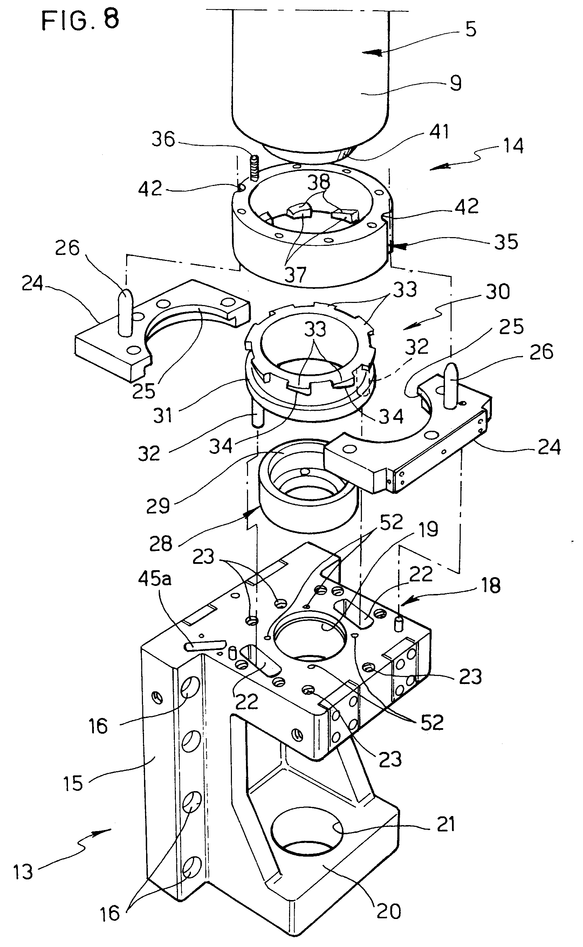

For this purpose, the invention provides for a fixing system, generally indicated 12, which can be fitted and released quickly and is shown in greater detail in Figures 3, 4, and 8 to 10.

The fixing system 12 includes essentially a support 13 which is fixed to the lower region of the slide 4 and an attachment unit 14 carried by the lower end of the casing 9 of the pot broach 5.

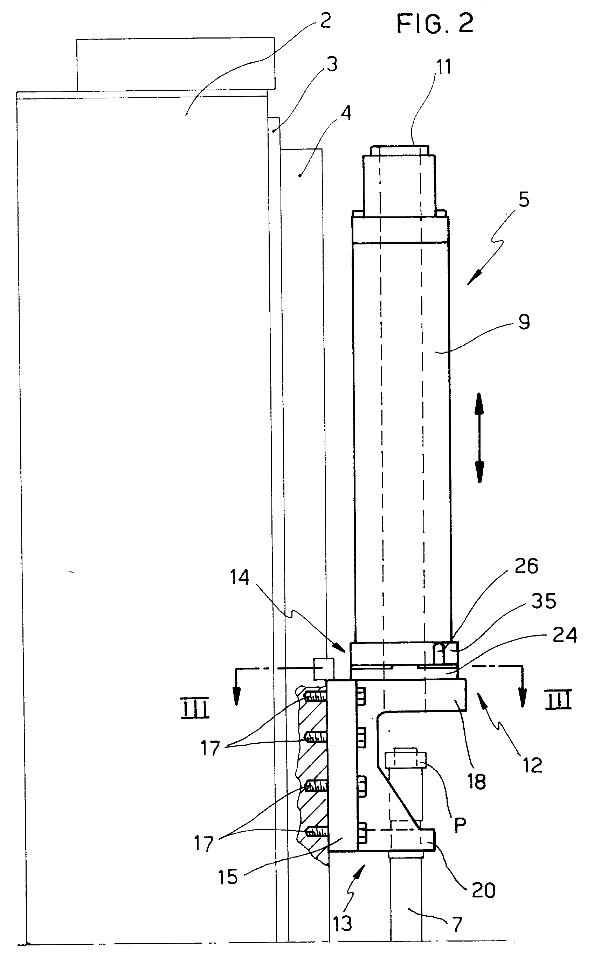

The support 13 includes a rear flat flange 15 with holes 16 for the engagement of screws 17 by means of which the support 13 is fixed permanently to the lower part of the vertical slide 4. Extending from the rear flange 15 are an upper horizontal bracket 18, which has a central hole 19 and is thus annular, and a lower horizontal plate 20 also with a central hole 21. The holes 19 and 21 are aligned coaxially with the pot broach 5 and the support rod 6 passes through them in the manner shown in Figures 1 and 2.

The upper wall of the bracket 18 has two elongate holes 22 on diametrally opposite sides of the central hole 19 and a ring of threaded holes 23.

The threaded holes 23 serve for the fixing, by means of screws not shown, of two opposed semi-annular plates 24 which surround the hole 19 and have respective upper edges which project radially outwardly and define semi-annular flanges 25. Each plate 24 also carries a respective locating and restraining pin 26 which projects vertically upwardly, the two pins 26 being in diametrally opposite positions relative to the hole 19.

The upper wall of the bracket 18 has a second ring of holes 52 radially inwardly of the ring of holes 23. The holes 52 serve for the fixing, around the periphery of the hole 19, by means of screws 27, of an annular centering element 28 which is also coaxial with the hole 19 and has an upper, upwardly-flared opening 29.

A rotatable ring nut 30 interposed coaxially between the two plates 24 and the centering ring 28 has a lower, outer annular flange 31 which is disposed facing the two semi-annular flanges 25 of the plate 24 from below and in sliding contact therewith. The ring nut 30 is thus clamped axially to the bracket 18.

Two diametrally-opposed cylindrical abutment projections 32 project downwardly from the lower end of the ring nut 30 and are fitted loosely in the holes 22. Moreover, a peripheral ring of spaced-apart, external, radial teeth 33 with inclined lower surfaces 34 with helical ramps projects from the upper edge of the ring nut 30.

The attachment element 14 at the lower end of the casing 9 of the pot broach 5 comprises essentially a horizontal ring 35 which is fixed coaxially to the casing 9 by screws 36 and has an inside diameter larger than the outside diameter of the ring nut 30. The fixed ring 35 has a ring of spaced-apart, internal, radial teeth 37 like the teeth 33 of the ring nut 30 and having respective inclined upper surfaces 38 like helical ramps and complementary to the helical ramps 34 of the external radial teeth 33.

An annular centering element 40 complementary to the annular centering element 28 fixed to the bracket 18 is also fixed, by means of screws 39, to the lower end of the casing 9 in correspondence with the edge of the inlet opening 10 of the pot broach 5 and coaxial with the fixed ring 35. This annular centering element 40 has a downwardly divergent, conical outer surface 41 which is adapted to be centred in the flared opening 29 of the annular element 28.

The periphery of the fixed ring 35 has two diametrally opposed, substantially semicircular notches 42, in which the two vertical locating pins 26 carried by the plates 24 are adapted to be engaged in the manner best seen in Figure 3. Moreover, the fixed ring 35 may have a further radial notch 43a in which a movable, angular restraint member 44a, operated, for example, by a pressurised-fluid actuator carried by the bracket 18 in a recess 45a, may be engaged.

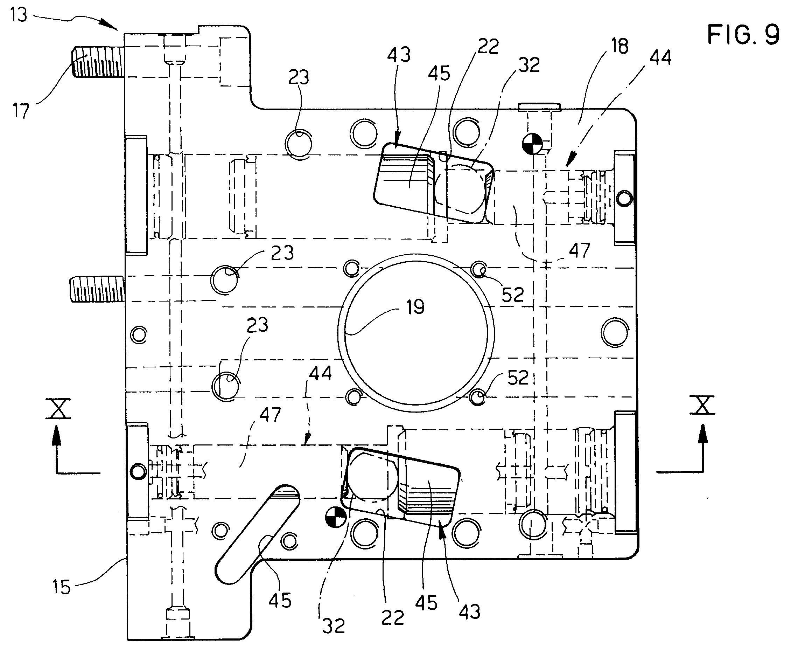

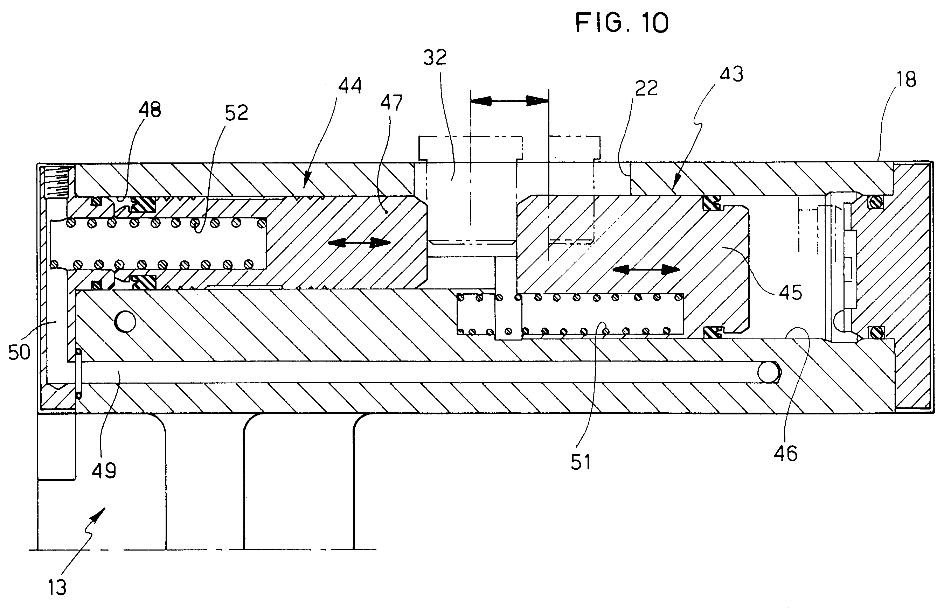

With reference now in greater detail to Figures 9 and 10, as stated above, the two axial abutment appendages 32 of the ring nut 30 are movable in respective holes 22 in the bracket 18. First and second hydraulic actuators 43 and 44, housed in the bracket 18 are associated with each appendage 32 on opposite sides, the actuators 43 and 44 of each pair being at opposite ends.

Each actuator 43 includes a piston 45 sealingly slidable in a cylinder 46 in the plate 18 and each actuator 44 similarly includes a piston 47 sealingly slidable in a cylinder 48 also in the plate 18. The cylinders 46 and 48 are connected to a hydraulic supply circuit, not shown but within the capabilities of an expert in the art, by ducts 49, 50 also in the bracket 18. The circuit is such that, when the chambers 46 are supplied with hydraulic fluid under pressure, the chambers 48 are discharged and vice versa.

A helical compression spring 51 associated with each piston 45 tends to move the piston 45 away from the respective abutment appendage 32 and a helical compression spring 52 associated with each piston 47 tends to urge the piston 47 towards the respective abutment appendage 32.

The operation of the two actuators 43 rotates the ring nut 30 clockwise, with reference to the drawings, by means of the abutment appendages 32 whilst the operation of the two actuators 44 rotates it in the opposite sense, that is, anticlockwise with reference to the drawings. The ring nut 30 can thus be rotated from an angular starting position, in which the external radial teeth 34 are aligned with the spaces between the internal radial teeth 37 of the fixed ring 35, to a final clamping position in which the teeth 33 are aligned with the teeth 37 and vice versa. The angular movement from the first position to the second is imparted by the hydraulic actuators 43 and the return movement in the opposite sense is imparted by the actuators 44.

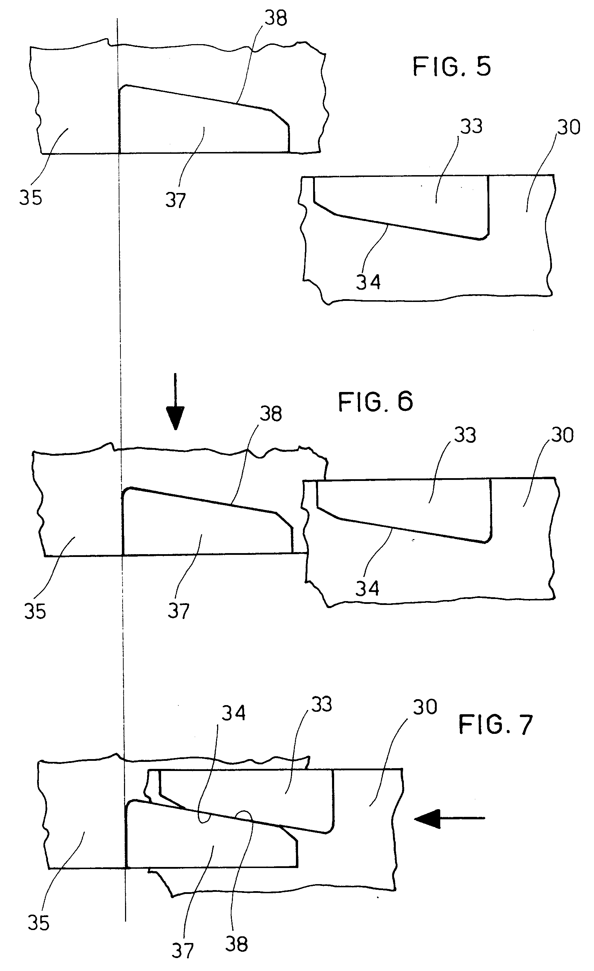

The operation of the fixing system 12 will now be described, assuming that the pot broach 5 is to be fitted on the bracket 18 which is ready to receive it. In this situation, the ring nut 30 is kept in its angular starting position, which is described above and shown in Figure 5, and the pot broach 5 is lowered vertically towards the bracket 18. Before the lower end of the casing 9 is brought to bear against the bracket 18, the casing 9 must be oriented so that the notches 42 in the fixed ring 35 are positioned angularly in correspondence with the locating pins 26. The pot broach 5 is then lowered further whilst the ring nut 30 is kept in its angular starting position, the annular element 40 being centered in the flared opening 29 of the annular element 28. The pot broach 5 is then lowered fully, so that the internal radial teeth 37 of the fixed ring 35 pass through the spaces between the external radial teeth 33 of the ring nut 30 until the base of the ring 35 bears on the plates 24 (Figures 6 and 3). The pot broach 5 is then supported by the bracket 18 and is prevented from rotating relative thereto by the locating pins 26 which are engaged in the notches 42 and possibly by the movable radial restraint member 44a engaged in the recess 43a in the ring 35.

At this point, the two jacks 43 are activated so as to rotate the ring 30 from its starting position to its final position so that the the external radial teeth 33 and the internal radial teeth 37 are engaged face to face by the helical sliding coupling of their respective surfaces 34 and 38. The fixed ring 35, and hence the pot broach 5, are thus firmly clamped axially to the ring nut 30, and hence to the bracket 18, as a result of the interaction between the teeth 33 and 37, of which the former are situated uppermost and the latter lowermost as shown in Figure 7.

The broaching machine is then ready to operate.

Whenever the pot broach 5 has to be removed and replaced, it suffices to operate the actuators 44 so as to rotate the ring nut 30 to its starting position, releasing the teeth 33 from the teeth 37 so that the pot broach 5 can be separated and moved vertically away from the bracket 18 and then replaced.

It is clear from the foregoing that the pot broach 5 can be fitted on the vertical slide 4 and removed therefrom extremely quickly and easily with very short pauses in the operation of the machine and with very little manual intervention.

Naturally, the details of construction and forms of embodiment may be varied widely with respect to those described and illustrated, without thereby departing from the scope of the present invention.

## Claims

1. A vertical broaching machine including a structure (2) carrying vertical guide means (3) along which a slide (4) is movable, a pot broach (5) with a vertical axis carried by the slide (4) and containing at least one annular broaching tool (53) coaxial with the pot (5), a vertical rod (6) arranged coaxially below the pot broach (5) for supporting the pieces (P) to be broached, and releasable means (12) for fixing the pot broach (5) to the slide (4), characterised in that a horizontal annular bracket (18) fixed to the bottom of the slide (4) supports the lower end (35) of the pot broach (5), and in that the releasable fixing means (12) clamp the lower end (35) of the pot broach (5) to the annular bracket (18).

2. A broaching machine according to Claim 1, characterised in that the fixing means (12) include a helical, axial coupling (34, 38) between the lower end (35) of the pot broach (5) and the annular bracket (18).

3. A broaching machine according to Claim 2, characterised in that motor-driven actuator means (43, 44) are associated with the helical coupling (34, 38) for engaging it after the lower end (35) of the pot broach (5) has been brought to bear axially on the annular bracket (18) from above and releasing it to enable the pot broach (5) to be moved axially upwardly away from the horizontal bracket (18).

4. A broaching machine according to Claim 3, characterised in that the motor-driven actuator means (43, 44) are incorporated in the annular bracket (18).

5. A broaching machine according to Claim 3 or Claim 4, characterised in that it also includes axial centering means (28, 40) and means (26, 42, 43a, 44a) for restraining the lower end (35) of the pot broach (5) angularly relative to the annular bracket (18).

6. A broaching machine according to Claim 5, characterised in that the annular bracket (18) supports coaxially a horizontal ring nut (30) which is rotatable but is fixed axially and has a ring of first, spaced-apart radial teeth (33) with helical ramps (34), and the lower end of the pot broach (5) has a horizontal fixed ring (35) coaxial with the ring nut (30) and having a ring of second spaced-apart radial teeth (37) which have helical ramps (38) and are complementary to the first teeth (33), the ring nut (30) being movable angularly between a position in which the fixed ring (35) can be fitted thereon from above and in which the spaces between the first teeth (33) are aligned axially with the second teeth (37) and a clamping position in which the first teeth (33) are engaged face to face against the second teeth (37).

7. A broaching machine according to Claim 6, characterised in that the rotatable ring nut (30) has two diametrally-opposed, axial abutment projections (32) and in that the motor-driven actuator means comprise two pairs of horizontal, opposed, linear fluid actuators (43, 44) which act against the axial abutment projections (32) in order to rotate the ring nut (30) from its fitting position to its clamping position and vice-versa.

8. A broaching machine according to Claim 7, characterised in that respective resilient thrust members (51, 52) are associated with the linear actuators (43, 44).

9. A broaching machine according to Claim 6, characterised in that the annular bracket (18) also has an annular centering element (28) arranged concentrically within the rotatable ring nut (30) and having an upwardly flared opening (29), and in that the lower end of the pot broach (5) also has a complementary annular centering element (40) arranged concentrically within the fixed ring (35) and having a downwardly-convergent, conical outer surface (41) which is adapted to be centered axially in the flared opening (29).

10. A broaching machine according to Claim 6, characterised in that the annular bracket (18) also has a movable radial engagement member (44a) for engaging a corresponding radial recess (43a) in the fixed ring (35).

FIG. 1

# FIG. 2

FIG. 3

EP 0 520 122 A1

FIG. 4

FIG. 5

38

33    30

35    37    34

FIG. 6

38

33    30

35    37    34

34    33    30    FIG. 7

35    37    38

FIG. 8

FIG. 9

EP 0 520 122 A1

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 473 815 (J. OAKLEY) | 1 | B23D37/12 |
| Y | * the whole document * | 1-6 | B23D41/04 |
| | --- | | B23F1/08 |
| Y | DE-U-8 621 671 (MANNESMANN AG) | 1-6 | B23Q3/155 |
| | * page 4, line 14 - page 5, line 8; claim 1; figures 1-3 * | | |
| | --- | | |
| A | DE-A-1 817 257 (COLONIAL BROACH & MACHINE COMPANY) | 1-10 | |
| | * page 5, line 1 - page 7, line 2; claims 1-10; figures 1-12 * | | |
| | --- | | |
| A | EP-A-0 151 819 (BISIACH & CARRU' S.P.A.) | 2-8 | |
| | * abstract; figures 1,2,4,6,10,11 * | | |
| | --- | | |
| A,D | WO-A-9 015 685 (VARINELLI S.P.A.) | 1 | |
| | * abstract; figures 1-6 * | | |
| | ----- | | TECHNICAL FIELDS SEARCHED (Int. Cl.5) |
| | | | B23D |
| | | | B23F |
| | | | B23Q |
| | | | B23B |
| | | | B25J |

The present search report has been drawn up for all claims

| Place of search | Date of completion of the search | Examiner |
|---|---|---|
| BERLIN | 07 FEBRUARY 1992 | CUNY J. |